# EUROPÄISCHE PATENTSCHRIFT

(11) **EP 2 894 022 B1**
(45) Veröffentlichungstag und Bekanntmachung des Hinweises auf die Patenterteilung: **01.01.2020**
(21) Anmeldenummer: 15150997.3
(22) Anmeldetag: 13.01.2015
(51) Int. Cl.: B29C 65/08, B29C 65/06

(54) **SONOTRODE, SCHWEIßVORRICHTUNG MIT SONOTRODE SOWIE DAZUGEHÖRIGES SCHWEIßVERFAHREN**
SONOTRODE, WELDING DEVICE WITH SONOTRODE AND CORRESPONDING WELDING METHOD
SONOTRODE, DISPOSITIF DE SOUDURE DOTÉ D'UNE SONOTRODE ET PROCÉDÉ DE SOUDAGE ASSOCIÉ

(30) Priorität: 13.01.2014 DE 102014200447
(43) Veröffentlichungstag der Anmeldung: 15.07.2015
(73) Patentinhaber: BRANSON Ultraschall Niederlassung der Emerson Technologies GmbH & Co. OHG, 63128 Dietzenbach (DE)
(72) Erfinder: Jaume, Cidoncha, 08811 Canyelles, Barcelona (ES); Sergi, Gabarró, 08320 El Masnou, Barcelona (ES)
(74) Vertreter: Heyer, Volker

(56) Entgegenhaltungen:
- WO-A1-2014/063846
- DE-A1-102007 060 442
- DE-A1-102009 042 983
- JP-A- S5 613 132
- US-A- 4 554 034

## Beschreibung

Die vorliegende Erfindung betrifft eine Sonotrode zum Reibschweißen von mindestens zwei Fügeteilen, die zumindest teilweise aus verschweißbarem Kunststoff bestehen, eine entsprechende Schweißvorrichtung sowie ein entsprechendes Schweißverfahren.

Bei der Herstellung von Kunststoffbeuteln für beispielsweise Seife, Getränke oder ähnliche Produkte, wird zunächst ein zu befüllender Kunststoffbeutel in Rohform bereitgestellt. Die Rohform des Kunststoffbeutels verfügt, über eine Öffnung, durch die die Rohform mit Produkt befüllbar ist. Üblicherweise ist diese Öffnung zwischen sich gegenüberliegenden Enden einer Folie oder zwischen zwei separaten Folien gebildet.

Nachdem die Rohform des Kunststoffbeutels über die Öffnung mit Produkt gefüllt wurde, muss die Öffnung verschlossen werden. Das Verschließen muss dabei so erfolgen, dass ein Verwender bzw. Benutzer einfach wieder an das im Kunststoffbeutel enthaltene Produkt gelangen kann und den Kunststoffbeutel unter Umständen auch wieder verschließen kann. Üblicherweise wird dazu ein Fügeteil aus Kunststoff in die Öffnung der Rohform eingesetzt und mit der Rohform mittels Wärme verschweißt. Zwischen dem Fügeteil und dem jeweiligen daran angrenzenden Folienbereich liegt somit die Fügezone vor.

Gemäß Stand der Technik wird in einem ersten Schritt die befüllte Rohform des Kunststoffbeutels in der Fügezone für eine bestimmte Zeit unter Wärmeeinwirkung zusammengedrückt. Anschließend wird die Rohform des Kunststoffbeutels zu einem zweiten Bereich bewegt, wo sie erneut unter Wärmeeinwirkung zusammengedrückt und somit verschweißt wird. Dann wird die Rohform des Kunststoffbeutels zu einem dritten Abschnitt bewegt, um ihn an der Fügezone abzukühlen. Nachdem dieser Prozess abgeschlossen ist, liegt der fertige und mit Produkt gefüllte Kunststoffbeutel vor.

Dieses Verfahren weist den Nachteil auf, dass beim Befüllen der Rohform des Kunststoffbeutels mit Produkt das Produkt auch an den Stellen hängen bleibt, die später mit dem Fügeteil verschweißt werden sollen. Solche Produktrückstände in diesem Bereich wirken sich jedoch nachteilig auf die Ausbildung der Schweißverbindung aus, so dass diese im schlechtesten Fall gar nicht hält.

Ein weiterer Nachteil ist, dass aufgrund des doppelten Schweißens mittels Wärme sowie des anschließenden separaten Abkühlens eine Produktionsmaschine mit großer Länge verwendet werden muss, was raumintensiv ist. Zudem sind die Schweißzeiten zum Erhalten einer wirksamen Schweißverbindung lang, so dass das Verfahren auch zeitintensiv ist. Insgesamt gesehen ist das bekannte Schweißverfahren somit kostenintensiv.

Eine Ultraschall-Sonotrode oder ein Gegenwerkzeug für eine Ultraschall-Sonotrode zum Einschweißen eines Spouts in einen flexiblen Beutel für Getränke, Lebensmittel, Tierfutter und dergleichen ist in DE 10 2009 042983 A1 beschrieben. Die Ultraschallsonotrode und/oder das Gegenwerkzeug weist hierbei eine an die Form des Spouts angepasste Schweißfläche mit einer Strukturierung auf.

In WO 2014/063846 A1 wird ein Verfahren zur Herstellung eines Antriebskabels, insbesondere zum Einsatz in Kraftfahrzeugen, wie bei Hebe- und/oder Schiebedächern oder Sonnenschutzrollos, beschrieben. Wenigstens ein Ende des Antriebskabels wird mit einer Abschlusskappe versehen und durch Ultraschallschweißen mit dieser verbunden. Der Ultraschalleintrag erfolgt flächig über im Wesentlichen die gesamte Außenfläche der Abschlusskappe. Eine Steigungswendel des Antriebskabels wird vor dem Verbinden mit der Abschlusskappe im Bereich des von der Abschlusskappe überdeckten Antriebskabelendes angeschliffen.

JP S56-13132 A beschreibt eine Ultraschall-Schweißvorrichtung. Die an einer überhitzten Spitze während eines Ultraschallschweißvorgangs erzeugte Wärme wird durch ein Wärmerohr schnell auf eine Sonotrode übertragen. Eine Wärmemenge Q1 wird an einem Endabschnitt des Wärmerohrs aufgrund der Verdampfung einer Arbeitsflüssigkeit absorbiert. Die verdampfte Arbeitsflüssigkeit wird dann kondensiert, um eine Wärmemenge Q2 abzustrahlen. Die kondensierte Arbeitsflüssigkeit wird durch Kapillarwirkung in die ursprüngliche Position zurückgeführt. Die Wärme wird gemäß diesem Wärmezyklus übertragen. Durch das in der Sonotrode und in der Spitze installierte Wärmerohr kann ein Temperaturanstieg der Spitze verhindert werden, so dass die Erzeugung von Schweißwärme minimiert werden kann. Daher kann die thermische Verschlechterung eines Materials aufgrund des Schweißens minimiert werden.

Eine Sonotrode mit U-Spalt ist in DE 10 2007 060 442 A1 beschrieben. Die Ultraschall-Sonotrode weist eine Siegelfläche auf, die dafür vorgesehen ist, mit dem zu bearbeitenden Material in Kontakt zu treten. Um eine Ultraschall-Sonotrode, eine Ultraschallsiegelvorrichtung sowie ein Verfahren zum Ultraschallbearbeiten bereitzustellen, das eine aufwendige Positionierung der Sonotrode vermeidet und dennoch eine gleichbleibende gute Qualität der Schweißnaht gewährleistet, wird vorgeschlagen, dass die Siegelfläche zweiteilig ausgebildet ist und die beiden Siegelflächenteile durch zwei zueinander zugewandte Siegelflächenabschnitte gebildet werden.

Abschließend betrifft US 4,554,034 A ein Verfahren und eine Vorrichtung zum Verbinden eines überlappenden Abschnitts einer äußeren Kappe und eines inneren Körpers einer geschlossenen zylindrischen Kapsel. Hierzu wird eine flexible röhrenförmige Kupplung, die um den Umfang der Kapsel angeordnet ist, zusammengedrückt, um eine nach innen gerichtete radiale Kraft auf die Kapsel auszuüben, während eine Ultraschallvibrationsbewegung in eine Richtung parallel zur Achse der Kapsel durch einen Ultraschallwandler mit einer starren Spitze ausgeübt wird, die an der Kupplung befestigt ist. Zum Verbinden von Gelatinekapseln kann die einstückige Kupplung oder die geteilte Kupplung ein polymeres Elastomer-Material wie etwa Latexkautschuk mit etwa der gleichen akustischen Impedanz wie die Kapsel umfassen.

Die objektive technische Aufgabe der vorliegenden Erfindung ist daher die Herstellung eines Kunststoffbeutels, der im Hinblick auf die Qualität der Schweißverbindung sowie wirtschaftlich optimiert ist.

Die obige objektive technische Aufgabe wird gelöst durch eine Sonotrode gemäß dem unabhängigen Patentanspruch 1, eine Schweißvorrichtung gemäß dem unabhängigen Patentanspruch 7 sowie ein Schweißverfahren gemäß dem unabhängigen Patentanspruch 11. Vorteilhafte Ausführungsformen ergeben sich aus der nachfolgenden Beschreibung, den Zeichnungen sowie den abhängigen Patentansprüchen.

Die erfindungsgemäße Sonotrode bzw. Reibschweißsonotrode zum Reibschweißen von mindestens zwei Fügeteilen, die zumindest teilweise aus verschweißbarem Kunststoff bestehen, umfasst eine Längsachse, entlang der die Sonotrode im Betrieb auslenkbar ist, eine Arbeitsfläche, die bezogen auf die Längsachse lateral an der Sonotrode angeordnet ist, so dass Fügeenergie lateral in eine Fügezone zwischen einem ersten und einem zweiten Fügeteil einleitbar ist, und die im Betrieb an das erste Fügeteil anlegbar ist, wobei die Arbeitsfläche eine erste Struktur aufweist, deren Form an eine Gestalt zumindest des zweiten Fügeteils anpassbar ist.

Vorzugsweise ist die erste Struktur der Arbeitsfläche parallel zur Schwingungsrichtung und nicht zweidimensional ausgebildet. Dadurch bildet die erste Struktur der Arbeitsfläche keine Ebene.

Die obige erfindungsgemäße Sonotrode wird nun näher erläutert anhand einer Funktionsweise einer Reibschweißvorrichtung während eines entsprechenden Reibschweißverfahrens, wobei beispielhaft auf die Herstellung eines Kunststoffbeutels Bezug genommen wird. Die Schweißvorrichtung umfasst die erfindungsgemäße Sonotrode sowie einen Amboss mit einer Druckfläche, wobei im Betrieb der Schweißvorrichtung das erste Fügeteil an der Arbeitsfläche der Sonotrode anliegt und das erste sowie das zweite Fügeteil mittels der Druckfläche des Ambosses gegen die Arbeitsfläche der Sonotrode drückbar sind.

Das Schweißverfahren umfasst zunächst den Schritt des Bereitstellens eines ersten und eines zweiten Fügeteils, die zumindest teilweise aus einem verschweißbaren Kunststoff bestehen. Bezug nehmend auf die Herstellung des beispielhaften Kunststoffbeutels wird zunächst von einer Rohform des Kunststoffbeutels ausgegangen, die an einem Ende offen ist.

In einer ersten Ausführungsform handelt es sich bei der Rohform des Kunststoffbeutels um eine einzige Folie, die ein erstes axiales Ende und ein zweites axiales Ende aufweist und die so gefaltet wurde, dass die beiden axialen Enden übereinander liegen. Die beiden axialen Enden werden im Rahmen der vorliegenden Erfindung jeweils als eigene Fügeteile dargestellt, wobei eines der axialen Enden das erste Fügeteil darstellt. Die Ränder der sich gegenüberliegenden Seiten sind miteinander verschweißt, so dass an der verbliebenen Seite mit den beiden axialen Enden eine Öffnung in der Rohform des Kunststoffbeutels vorhanden ist.

Alternativ wird in einer zweiten Ausführungsform die Rohform des Kunststoffbeutels aus mindestens zwei Folien gebildet, die derart miteinander verschweißt sind, dass nur an einer Seite der Rohform des Kunststoffbeutels zwischen zwei Folien eine Öffnung bleibt. Die beiden Folien, zwischen denen die Öffnung gebildet ist, werden ebenfalls als getrennte Fügeteile behandelt, wobei eine der Folien das erste Fügeteil darstellt.

In einer Ausführungsform wird die Öffnung zunächst zur Befüllung der Rohform des Kunststoffbeutels mit Produkt genutzt. In einer anderen Ausführungsform wird zunächst das im Folgenden beschriebene zweite Fügeteil in die Öffnung der Rohform des Kunststoffbeutels eingesetzt und mit dieser verschweißt, bevor ein Produkt in den Kunststoffbeutel gefüllt wird.

Zum Verschließen der Öffnung in der Rohform des Kunststoffbeutels wird das zweite Fügeteil verwendet. Das zweite Fügeteil weist vorzugsweise eine Öffnung auf, durch die das Produkt bei einer späteren Verwendung durch einen Benutzer wieder aus dem Kunststoffbeutel entnehmbar ist. Insbesondere wenn das zweite Fügeteil über einen Öffnung mit Schraubverschluss verfügt, dann kann die Öffnung in der Rohform des Kunststoffbeutels mittels des zweiten Fügeteils so verschlossen werden, dass ein Verwender später einfach und leicht an das im Kunststoffbeutel enthaltene Produkt gelangen kann und den Kunststoffbeutel danach wieder verschließen kann. Das zweite Fügeteil kann von seiner äußeren Gestaltung jede beliebige runde oder eckige Form aufweisen, wobei es vorzugsweise die Form eines Rhomboeders aufweist.

Nachdem das zweite Fügeteil in der Öffnung in der Rohform des Kunststoffbeutels angeordnet wurde, wird diese Anordnung zur Sonotrode bewegt. Wie bereits oben dargelegt, weist die Sonotrode eine erste Struktur der Arbeitsfläche auf, die an die Form des zweiten Fügeteils angepasst ist. Dies gilt vorzugsweise auch für die erste Struktur der Druckfläche des Amboss. Die erste Struktur der Arbeitsfläche der Sonotrode und vorzugsweise die erste Struktur der Druckfläche des Amboss bilden jedoch jeweils keine durchgehende Ebene. Vielmehr bestehen die erste Struktur der Arbeitsfläche und/oder die erste Struktur der Druckfläche aus einer nicht ebenen, gebogenen und/oder abgewinkelten Fläche, die vorzugsweise zusammenhängend ausgebildet ist. Alternativ dazu bestehen die erste Struktur der Arbeitsfläche und/oder die erste Struktur der Druckfläche aus einer Mehrzahl von gebogenen und/oder ebenen Teilflächen, die nicht zusammenhängend ausgebildet sind. In beiden Ausgestaltungen ist die erste Struktur der Arbeitsfläche immer parallel zur Schwingungsrichtung der Sonotrode ausgerichtet. Auf diese Weise ist die Arbeitsfläche der Sonotrode an jede beliebige Form des zweiten Fügeteils anpassbar.

In einem zweiten Schritt werden das erste und das zweite Fügeteil dann zwischen der lateral zur Schwingungsrichtung der Sonotrode angeordneten Arbeitsfläche der Sonotrode und der Druckfläche des Amboss so angeordnet, dass das erste Fügeteil der Arbeitsfläche der Sonotrode zugewandt ist. Dann wird der Amboss mit der Druckfläche in Richtung der Arbeitsfläche der Sonotrode bewegt. Somit gelangt das erste Fügeteil in Anlage an der Arbeitsfläche der Sonotrode und die Druckfläche des Ambosses drückt bzw. presst das erste und das zweite Fügeteil gegen die Arbeitsfläche der Sonotrode. Da die Arbeitsfläche der Sonotrode eine Form aufweist, die an eine Gestaltung des zweiten Fügeteils angepasst ist, wird das erste Fügeteil im Betrieb auf der einen Seite an die Arbeitsfläche der Sonotrode und auf der anderen Seite an das zweite Fügeteil gedrückt. Während die Druckfläche des Ambosses das erste und das zweite Fügeteil gegen die Sonotrode drückt, wird die Sonotrode dann zum Schwingen entlang ihrer Längsachse angeregt.

Die sich ergebende Fügezone, also der Bereich, in dem das erste mit dem zweiten Fügeteil verschweißt wird, bildet aufgrund der beliebigen Form des zweiten Fügeteils ebenfalls keine durchgehende Ebene. Dies ist zusätzlich auch in der an das zweite Fügeteil angepassten Form der Arbeitsfläche der Sonotrode begründet. Analog zur Arbeitsfläche der Sonotrode besteht die Fügezone daher aus einer nicht ebenen, gebogenen und/oder abgewinkelten Fläche, die vorzugsweise zusammenhängend ausgebildet ist. Alternativ dazu besteht die Fügezone aus einer Mehrzahl von gebogenen oder ebenen Teilflächen, die nicht zusammenhängend ausgebildet sind. Dies steht im Gegensatz zu bisher bekannten Reibschweißvorrichtungen, in denen ebene Flächen von gegenüberliegenden Fügeteilen miteinander in Anlage gebracht und verschweißt werden.

Wie oben erwähnt liegt die Arbeitsfläche der Sonotrode erfindungsgemäß an einer Seitenfläche der Sonotrode vor, ist also bezogen auf die Längsachse, entlang der die Sonotrode im Betrieb schwingt, lateral vorhanden. Somit befindet sich die Arbeitsfläche nicht an einem axialen Ende der Sonotrode, wie es im Stand der Technik üblich ist, sondem an einer Seitenfläche. Auf diese Weise werden daher auch die Probleme beim axialen Einleiten von Fügeenergie in das Material vermieden, wie sie insbesondere beim Fügen von Kunststoffen mittels Ultraschall vorkommen. Probleme treten hierbei insbesondere beim axialen Ultraschallschweißen von Kunststoffteilen mit nicht ebenen Oberflächen auf. Üblicherweise liegt am mit den zu verschweißenden Bauteilen in Kontakt kommenden axialen Ende der Sonotrode eine maximale Schwingungsamplitude, also ein Bauch des Schwingungssignals der Sonotrode, vor. Weist die Sonotrode nun an diesem axialen Ende eine nicht vollständig ebene Fläche, sondern Aussparungen bzw. Vorsprünge, auf, um an die Form eines zu verschweißenden Bauteils angepasst zu sein, dann kann es zu lokalen Über- und/oder Unterschweißungen kommen. Beides ist jedoch nachteilig für die Schweißverbindung insgesamt, weil es die Fügeteile nicht verlässlich verbindet oder die Fügeteile beim Verbinden beschädigt.

Im Gegensatz dazu wird durch die erfindungsgemäße Reibschweißsonotrode, da die Arbeitsfläche der Sonotrode an einer Seitenfläche vorhanden ist, Fügeenergie lateral in die Fügezone zwischen dem ersten Fügeteil der Rohform des Kunststoffbeutels und dem zweiten Fügeteil eingeleitet. Auf diese Weise bildet sich eine Schweißverbindung ohne lokale Über- oder Unterschweißungen zwischen dem ersten Fügeteil und dem zweiten Fügeteil aus.

Als Parameter zur Einstellung des Schweißverfahrens werden insbesondere die Amplitude der Sonotrode, der auf die zu verschweißenden Fügeteile ausgeübte Druck sowie die Fügedauer variiert. In einer bevorzugten Ausführungsform findet daher keine Variierung der Schwingungsfrequenz der Sonotrode statt.

Nachdem der Schweißprozess abgeschlossen ist, werden die Arbeitsfläche der Sonotrode und die Druckfläche des Ambosses auseinander bewegt, damit die miteinander verschweißten ersten und zweiten Fügeteile aus der Schweißvorrichtung entnehmbar sind.

Ein Vorteil der vorliegenden Erfindung ist, dass selbst mit Produktrückständen im Fügebereich bzw. der Fügezone eine sichere Schweißverbindung gewährleistet ist. Zudem werden durch die Schwingungen im Ultraschallbereich Bakterien im Fügebereich abgetötet, so dass eine hygienische Verbindung realisierbar ist. Dies ist besonders bei der Verarbeitung von Produkten aus dem Lebensmittel- und Pharmabereich vorteilhaft. Weiterhin sind schnelle Arbeitszyklen aufgrund des schnellen, effizienten und kostengünstigen Schweißverfahrens möglich. Ebenso sind der Wartungsaufwand sowie der benötigte Raum für die Schweißvorrichtung im Vergleich zum Wänneschweißen gering, genauso wie der Aufwand zum Steuern des Verfahrens. Insbesondere entfällt ein getrennter Abkühlschritt.

In einer bevorzugten Ausfuhrungsform weist die Arbeitsfläche der Sonotrode eine zweite Struktur auf, insbesondere in Form einer Mehrzahl von Erhebungen. Mittels der zweiten Struktur wird ein im Betrieb an die Sonotrode gedrücktes Bauteil von der Sonotrode mitgenommen und in Schwingung versetzt. Die zweite Struktur der Sonotrode kann daher auch als Mitnahmestruktur bezeichnet werden. Vorzugsweise verkrallt sich die Mitnahmestruktur in dem angrenzenden Fügeteil, so dass das angrenzende Fügeteil im wesentlichen die gleichen Bewegungen wie die Sonotrode ausführt. Auf diese Weise ist eine Verbindung zwischen zwei Bauteilen mittels Reibschweißen effektiv realisierbar.

In einer Ausführungsform weist die erste Struktur die Form eines Dreieckprismas auf. Mittels dieser Ausgestaltung sorgt die erste Struktur der Arbeitsfläche für die Anpassung an die Gestalt des zweiten Fügeteils. Liegt das zweite Fügeteil in Form eines Rhomboeders vor, dann ergibt sich für die Form der ersten Struktur der Arbeitsfläche ein Dreieckprisma. Das Dreieckprisma wird hierbei gebildet durch eine erste Seitenfläche der ersten Struktur an der Sonotrode, eine zweite Seitenfläche der ersten Struktur an der Sonotrode, deren tatsächlich oder gedachte Verlängerung die tatsächliche oder gedachte Verlängerung der ersten Seitenfläche in einer gedachten Schnittgerade schneidet und mit dieser einen Winkel einschließt, sowie einer gedachten Verbindungsfläche zwischen dem Ende der Seitenfläche der ersten und der zweiten Seite, die vorzugsweise senkrecht zur Winkelhalbierenden des Winkels zwischen der ersten Seite und der zweiten Seite verläuft. Hierbei ist zu beachten, dass in einer Ausführungsform eine Spitze des Dreieekprismas zwischen der ersten und der zweiten Seitenfläche abgerundet ist. Somit gehen die erste und die zweite Seitenfläche mittels einer Abrundung ineinander über. Im Hinblick auf die Details wird auf die nachfolgende detaillierte Beschreibung verwiesen.

Eine erfindungsgemäße Schweißvorrichtung bzw. Reibschweißvorrichtung zum Reibschweißen von mindestens zwei Fügeteilen, die zumindest teilweise aus verschweißbarem Kunststoff bestehen, umfasst eine erfindungsgemäße Sonotrode mit einer Arbeitsfläche, die bezogen auf eine Längsachse lateral angeordnet ist, die insbesondere an ein erstes Fügeteil anlegbar ist und die eine Form aufweist, die an ein zweites Fügeteil anpassbar ist, sowie einen Amboss mit einer Druckfläche, wobei im Betrieb der Schweißvorrichtung das erste oder das zweite Fügeteil an die Arbeitsfläche der Sonotrode anlegbar ist und das erste sowie das zweite Fügeteil mittels der Druckfläche des Ambosses gegen die Arbeitsfläche der Sonotrode drückbar sind. Im Hinblick auf die Arbeitsweise und die sich daraus ergebenen Vorteile wird auf die obigen Ausführungen zur erfindungsgemäßen Sonotrode verwiesen. Soll beispielsweise nur eine Folie als erstes Fügeteil mit einem Kunststoffbauteil als zweites Fügeteil verschweißt werden, dann wird gemäß einer ersten Ausführungsform das erste Fügeteil an der Arbeitsfläche der Sonotrode angeordnet. Aufgrund der Mitnahmestruktur der Sonotrode wird in diesem Fall das erste Fügeteil im Betrieb der Sonotrode in Schwingung versetzt. Das zweite Fügeteil wird durch eine Festhaltestruktur der Druckfläche des Ambosses festgehalten. Eine Schweißverbindung bildet sich auf der der Sonotrode zugewandten Seite des zweiten Fügeteils zwischen dem ersten und dem zweiten Fügeteil aus. In einer alternativen Ausführungsförm wird das zweite Fügeteil an der Sonotrode angeordnet, so dass die Folie als erstes Fügeteil an der Druckfläche des Ambosses anliegt. Wird nun die Sonotrode in Schwingung versetzt, dann wird aufgrund der Mitnahmestruktur an der Arbeitsfläche der Sonotrode das zweite Fügeteil in Schwingung .versetzt. Das erste Fügeteil wird in diesem Fall durch die Festhaltestruktur an der Druckfläche des Ambosses festgehalten. Die Schweißverbindung bildet sich also auf der dem Amboss zugewandten Seite des zweiten Fügeteils aus.

In einer bevorzugten Ausführungsform weist die Druckfläche des Amboss eine Form auf, die an eine Gestalt zumindest des zweiten Fügeteils anpassbar ist. Auf diese Weise ist neben der Arbeitsfläche der Sonotrode auch die Druckfläche des Amboss an die Gestalt des zweiten Fügeteils zumindest teilweise angepasst. Ein Einklemmen bzw. Festhalten des zweiten Fügeteils zwischen der Druckfläche des Ambosses und der Arbeitsfläche der Sonotrode ist somit gegenüber dem Stand der Technik verbessert.

In einer vorteilhaften Ausführungsförm weist die Druckfläche des Amboss eine erste Struktur auf, deren Form zumindest an eine Gestalt des zumindest zweiten Fügeteils anpassbar ist, wobei die erste Struktur des Ambosses insbesondere die erste Struktur der Sonotrode spiegelt. Ein Vorteil dieser Ausgestaltung ist, dass insbesondere bei symmetrischen zweiten Fügeteilen eine Orientierung des zweiten Fügeteils zwischen der Arbeitsfläche der Sonotrode und dem Amboss vorgegeben ist. Daher ist eine Bedienung vereinfacht und ein Verschweißen des ersten und des zweiten Fügeteils miteinander an einer nicht geeigneten Stelle ist vermeidbar.

Besonders bevorzugt ist es, wenn die Druckfläche des Ambosses eine zweite Struktur aufweist, insbesondere in Form einer Mehrzahl von Erhebungen. Aufgrund der Mehrzahl von Erhebungen kann ein jeweiliges Fügeteil besonders sicher zwischen Druckfläche und Arbeitsfläche gehalten bzw. eingeklemmt werden, Insbesondere verkrallt sich die Druckfläche des Ambosses mittels dieser zweiten Struktur in dem jeweiligen an die Druckfläche angrenzenden Fügeteil. Auf diese Weise ist ein effektives Festhalten des entsprechenden Fügeteils realisierbar. Die zweite Struktur der Druckfläche des Ambosses kann daher auch als Festhältestruktur bezeichnet werden. Diese Ausführungsform ist besonders bevorzugt in Kombination mit der Sonotrode, die ebenfalls eine zweite Struktur zum Mitnehmen eines daran anliegenden Fügeteils aufweist.

Das erfindungsgemäße Schweißverfahren bzw. Reibschweißverfahren mit einer erfindungsgemäßen Schweißvorrichtung umfasst die Schritte: Bereitstellen eines ersten und eines zweiten Fügeteils, die zumindest teilweise aus verschweißbarem Kunststoff bestehen, Anordnen des ersten und des zweiten Fügeteils zwischen der lateral zur Schwingungsrichtung der Sonotrode angeordneten Arbeitsfläche der Sonotrode und der Druckfläche des Amboss, insbesondere so, dass das erste Fügeteil die Arbeitsfläche der Sonotrode berührt, wobei die Arbeitsfläche der Sonotrode eine Form aufweist, die an eine Gestalt zumindest des zweiten Fügeteils angepasst ist, Anregen der Sonotrode zum Schwingen, wodurch Fügeenergie lateral in eine Fügezone einleitbar ist und sich eine Schweißverbindung zwischen dem ersten Fügeteil und dem zweiten Fügeteil ausbildet, und Auseinanderbewegen der Arbeitsfläche der Sonotrode und der Druckfläche des Ambosses, damit die miteinander verschweißten ersten und zweiten Fügeteile aus der Schweißvorrichtung entnehmbar sind. Im Hinblick auf die Arbeitsweise des erfindungsgemäßen Schweißverfahrens wird auf die obigen Ausführungen zur erfindungsgemäßen Sonotrode verwiesen. Die sich ergebenden Vorteile entsprechenden den zur erfindungsgemäßen Sonotrode diskutierten Vorteilen.

In einer bevorzugten Ausführungsform des Schweißverfahrens erfolgt eine Schwingung der Sonotrode im Ultraschallbereich, vorzugsweise zwischen 20 und 40 kHz, besonders bevorzugt zwischen 20 und 30 kHz. Aufgrund der angegebenen Frequenzbereiche arbeitet die Sonotrode im Ultraschallbereich und ein schnelles, effizientes und wirtschaftliches Verbinden der zwei Fügeteile miteinander ist gewährleistet.

Wenn das erste Fügeteil mit einer ersten Seite des zweiten Fügeteils verschweißt wurde, dann umfasst das Schweißverfahren in einer bevorzugten Ausführungsform die weiteren Schritte: Anordnen des zweiten und eines dritten Fügeteils zwischen der Arbeitsfläche der Sonotrode und der Druckfläche des Ambosses, insbesondere so, dass das dritte Fügeteil die Arbeitsfläche der Sonotrode und eine zweite Seite des zweiten Fügeteils berührt, wobei das erste Fügeteil die Druckfläche des Ambosses berührt, Anregen der Sonotrode zum Schwingen, wodurch sich eine Schweißverbindung zwischen dem zweiten Fügeteil und dem dritten Fügeteil ausbildet, und Auseinanderbewegen der Arbeitsfläche der Sonotrode und der Druckfläche des Ambosses, damit die miteinander verschweißten zweiten und dritten Fügeteile aus der Schweißvorrichtung entnehmbar sind. Nachdem der Arbeitsvorgang des Verschweißens des ersten Fügeteils mit dem zweiten Fügeteil beendet wurde, erfolgt in analoger Weise ein Verschweißen der zweiten Seite des ersten Fügeteils mit dem dritten Fügeteil auf der zweiten Seite. Hierzu kann die Anordnung aus verschweißtem erstem und zweitem Fügeteil um 180° um ihre Längsachse gedreht werden und in derselben Schweißvorrichtung erneut angeordnet werden. Auf diese Weise liegt dann das dritte Fügeteil an der Arbeitsfläche der Sonotrode an und das Verschweißen erfolgt analog zu dem oben beschriebenen Verschweißen des ersten Fügeteils mit dem zweiten Fügeteil. Alternativ wird die Anordnung aus miteinander verschweißtem erstem und zweitem Fügeteil nach dem Drehen um 180° zu einer weiteren Schweißvorrichtung transportiert, die entlang einer Förderstrecke des Kunststoffbeutels analog zur ersten Schweißvorrichtung ausgerichtet ist. In einer weiteren alternativen Ausführungsform wird nicht die Anordnung aus miteinander verschweißtem erstem und zweitem Fügeteil gedreht, sondern eine weitere Schweißvorrichtung entlang der Förderstrecke des Kunststoffbeutels ist seitenverkehrt zur ersten Schweißvorrichtung aufgebaut.

Nach dem Verschweißen des dritten Fügeteils mit dem zweiten Fügeteil ist der Kunststoffbeutel somit vollständig geschlossen. Wie bereits oben dargelegt sind in einer ersten Ausführungsform das erste und das dritte Fügeteil eine einzige Folie, deren axiale Enden sich im Bereich der Öffnung gegenüberliegen, in die das zweite Fügeteil eingesetzt wird. In einer zweiten Ausführungsform handelt es sich bei dem ersten und dem dritten Fügeteil um zwei separate Folien, die Bestandteil der Rohform des Kunststoffbeutels sind und zwischen denen die Öffnung gebildet ist.

Wie bereits eingangs erläutert kann der Kunststoffbeutel während des Verschweißens gefüllt sein, wobei er dann mit einer Öffnung nach oben transportiert wird, sodass ein darin enthaltenes Produkt nicht ausfließen kann. Sollte der Kunststoffbeutel noch leer sein, dann kann ein Verschweißen des Beutels mit dem ersten Fügeteil in jeder beliebigen Orientierung erfolgen.

Ein Kunststoffbeutel wurde mit dem erfindungsgemäßen Schweißverfahren hergestellt. Vorzugsweise handelt es sich bei dem Kunststoff um Polyethylen (PE) oder Polypropylen (PP), wobei das zweite Fügeteil und das erste Fügeteil aus dem gleichen oder aus unterschiedlichem Material bestehen können. Gleiche Materialien sind besonders bevorzugt, da dann eine besonders zuverlässige Schweißverbindung erzielbar ist.

Nachfolgend wird unter Bezugnahme auf die Zeichnungen eine Ausführungsform der vorliegenden Erfindung detailliert beschrieben. In den Zeichnungen zeigen gleiche Bezugszeichen gleiche Bauteile. Es zeigen:
- Figur 1: eine erste Ausführungsform einer erfindungsgemäßen Schweißvorrichtung mit Fügeteil
- Figur 2: die Ausführungsform gemäß Figur 1 mit umgedrehtem Fügeteil und
- Figur 3: einen schematischen Verfahrensablauf einer Ausführungsform des erfindungsgemäßen Schweißverfahrens.

Die Ausführungsform der erfindungsgemäßen Schweißvorrichtung bzw. Reibschweißvorrichtung wird anhand des Herstellens eines Kunststoffbeutels erläutert. Der Kunststoffbeutel weist als Material vorzugsweise thermoplastischen Kunststoff auf, insbesondere Polyethylen (PE) oder Polypropylen (PP). Dies gilt auch für ein zweites Fügeteil, wobei das Material des Kunststoffbeutels und des zweiten Fügeteils vorzugsweise gleich ist. Verwendet wird der Kunststoffbeutel beispielsweise zur Lagerung und zum Transport von fließfähigen Produkten, wie Seife, Getränken u.ä.

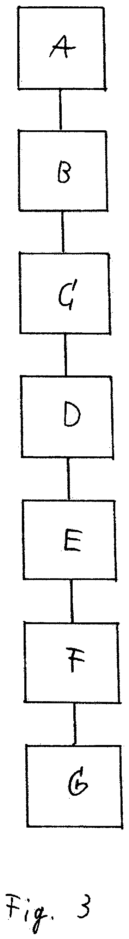

Bezug nehmend auf Fig. 3 wird in Schritt A eine erstes Fügeteil und ein zweites Fügeteil bereitgestellt. Bei dem ersten Fügeteil handelt es sich beispielsweise um eine erste Folie einer Rohform eines Kunststoffbeutels, die zusammen mit einer zweiten Folie des Kunststoffbeutels als drittes Fügeteil eine Öffnung in der Rohform des Kunststoffbeutels bildet. Wenn die Rohform des Kunststoffbehälters nur durch eine einzige Folie gebildet ist, dann wird das erste Fügeteil durch einen ersten die Öffnung begrenzenden Bereich der Folie repräsentiert und das dritte Fügeteil durch den zweiten die Öffnung begrenzenden Bereich der Folie. Die Öffnung der Rohform des Kunststoffbeutels kann zum Befüllen mit Produkt verwendet werden.

Eine Fertigstellung des Kunststoffbeutels wie nachfolgend beschrieben erfolgt in einer ersten Ausführungsform, nachdem die Rohform des Kunststoffbeutels bereits mit Produkt befüllt wurde. In diesem Fall ist darauf zu achten, dass die Öffnung der Rohform des gefüllten Kunststoffbeutels immer nach oben ausgerichtet ist, also so, dass kein Produkt versehentlich heraus fließen kann. In einer zweiten alternativen Ausführungsform wird die Rohform des Kunststoffbeutels in einem nicht befüllten Zustand wie nachfolgend beschrieben fertig gestellt. In diesem zweiten Fall ist die Ausrichtung der Öffnung nicht zwingend nach oben einzuhalten, da auch kein Produkt auslaufen kann. Vielmehr ist jede beliebige bzw. gewünschte Orientierung der Rohform des Kunststoffbehälters im Raum möglich.

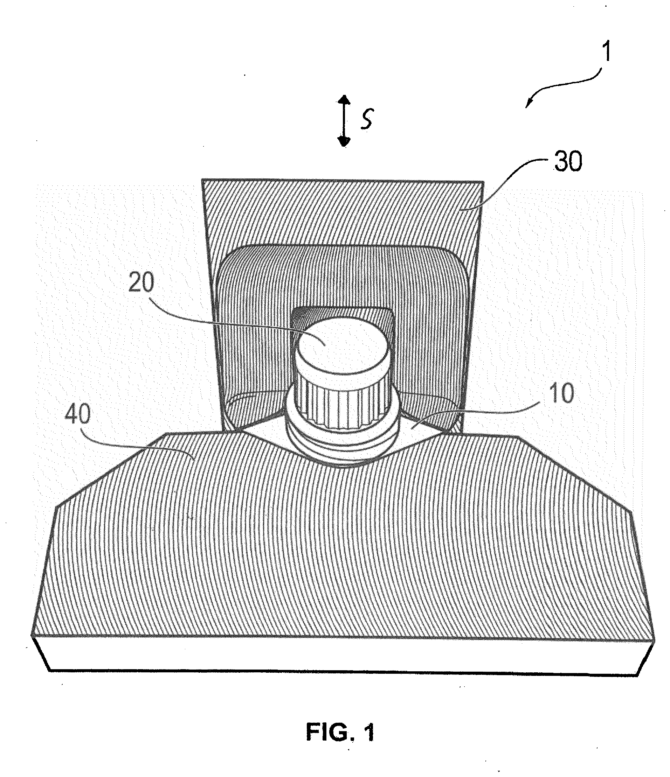

Nachfolgend wird das zweite Fügeteil in die Öffnung in der Rohform des Kunststoffbeutels eingesetzt, so dass es an das erste Fügeteil und das dritte Fügeteil angrenzt. In Schritt B werden das erste Fügeteil und das zweite Fügeteil 10 zwischen einer Arbeitsfläche einer Sonotrode 30 und einer Druckfläche eines Ambosses 40 angeordnet. Fig. 1 stellt eine entsprechende Schweißvorrichtung 1 dar. Wie in Fig. 1 erkennbar, ist das zweite Fügeteil 10 ein Rhomboeder und weist in der Mitte eine Öffnung auf, die mit einem Deckel mittels Drehverschluss verschlossen ist. Weiterhin kann an dem Deckel 20 eine Öffnungssicherung angeordnet sein, so dass ein erstmaliges Öffnen für nachfolgende Verwender erkennbar ist. Das erste Fügeteil befindet sich zwischen dem zweiten Fügeteil 10 und der Arbeitsfläche der Sonotrode 30. Aus Klarheitsgründen wurde der Kunststoffbeutel jedoch nicht dargestellt, so dass das erste Fügeteil ebenfalls nicht dargestellt wurde.

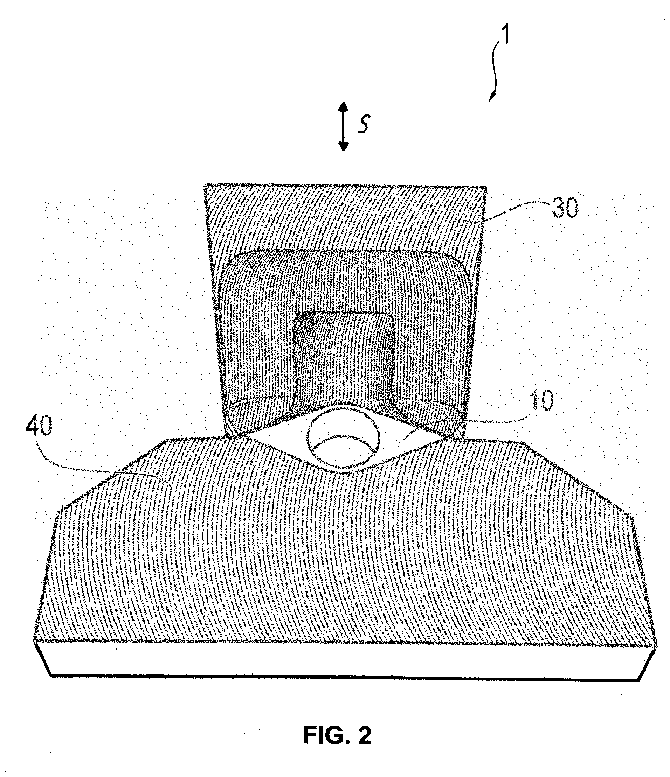

Zur weiteren Illustration ist in Fig. 2 das zweite Fügeteil 10 in umgekehrter Ausrichtung im selben Zustand wie in Fig. 1 dargestellt. Ein Kunststoffbeutel würde sich nun so erstrecken, dass ein Boden des Kunststoffbeutels nach oben zeigen würde. Daher eignet sich diese Variante nur für den Fall, dass der Kunststoffbeutel noch nicht mir Produkt gefüllt wurde.

Wie in der Fig. 1 erkennbar, weist sowohl die Arbeitsfläche der Sonotrode 30 als auch die Druckfläche des Ambosses 40 eine erste Struktur bzw. Form auf, die angepasst ist an die Gestalt des zweiten Fügeteils 10. Die Arbeitsfläche der Sonotrode 30 und vorzugsweise die Druckfläche des Amboss 40 bilden jedoch jeweils keine durchgehende Ebene. Vielmehr bestehen die Arbeitsfläche und die Druckfläche aus einer nicht ebenen, gebogenen und abgewinkelten Fläche, die zusammenhängend ausgebildet ist. Im vorliegenden Beispiel gemäß den Fig. 1 und 2 besteht sowohl die Arbeitsfläche als auch die Druckfläche aus zwei geraden Teilflächen, die über eine gebogene Teilfläche miteinander verbunden sind. Alternativ dazu können die Arbeitsfläche und/oder die Druckfläche aus einer Mehrzahl von gebogenen und/oder ebenen Teilflächen bestehen, die nicht zusammenhängend ausgebildet sind. Dies wäre beispielsweise der Fall, wenn die in den Fig. 1 und 2 dargestellte Arbeitsfläche und Druckfläche nicht die gebogene Teilfläche aufweisen würde, die die beiden gerade Teilflächen verbindet. In beiden Ausgestaltungen ist die Arbeitsfläche jedoch immer parallel zur Schwingungsrichtung S der Sonotrode 30 ausgerichtet, während die Arbeitsfläche in einer Richtung abweichend zur Schwingungsrichtung S nicht parallel zur Schwingungsrichtung S ausgerichtet ist. Sowohl die Arbeitsfläche als auch die Druckfläche können mit einer ersten Struktur und/oder einer zweiten Struktur versehen sein, um das kombinierte Mitnehmen und mit Druck beaufschlagen des ersten und des zweiten Fügeteils 10 zwischen der Arbeitsfläche und der Druckfläche zu unterstützen.

Die erste Struktur sorgt jeweils für die Anpassung an die Gestalt des zweiten Fügeteils. Vorliegend ist die zweite Struktur somit durch ein Dreieckprisma definiert, dass durch die beiden Seitenflächen der Arbeitsfläche bzw. der Druckfläche und die gedachte Verbindungsfläche zwischen den Enden der Seitenflächen der Arbeitsfläche bzw. der Druckfläche gebildet ist. Das Dreieckprisma weist in einer Ausführungsform mindestens eine abgerundete Ecke auf.

Vereinfacht ergibt sich das jeweilige Dreieckprisma also durch eine von links nach rechts senkrecht von oben nach unten durch das zweite Fügeteil verlaufende Diagonalebene in Fig. 1. Beispielhaft und bezogen auf die Sonotrode weist das Dreieckprisma also eine erste Seitenfläche der ersten Struktur auf, beispielsweise die linke Seitenfläche in Fig. 1. Eine zweite Seitenfläche der ersten Struktur befindet sich in Fig. 1 auf der rechten Seite. Eine gedachte Schnittgerade der ersten und der zweiten Seitenfläche liegt gemäß Fig. 1 ungefähr in der Mitte der Sonotrode 30 hinter dem Deckel 20 des zweiten Fügeteils 1.0, also an einer Spitze des Rhomboeders. Eine gedachte Verbindung der Punkte am Ende der jeweiligen Seitenfläche führt dann zu einem Dreieckprisma. Die gedachte Verbindung zwischen dem Ende der Seitenfläche der ersten und der zweiten Seite verläuft daher senkrecht zur Winkelhalbierenden des Winkels zwischen der ersten und der zweiten Seite. Analog gelten diese Ausführungen für das durch die erste Struktur der Druckfläche gebildete Dreieckprisma. Hierbei ist zu beachten, dass in einer Ausfuhrungsform eine Spitze des Dreieckprismas zwischen der ersten und der zweiten Seitenfläche abgerundet ist. Somit gehen die erste und die zweite Seitenfläche mittels einer Abrundung ineinander über.

Die zweite Struktur sowohl der Sonotrode 30 als auch des Amboss 40 besteht vorzugsweise aus einer Mehrzahl von Erhebungen. Die Erhebungen sorgen für eine Vergrößerung der Oberfläche, mit der die Arbeitsfläche bzw. die Druckfläche an den miteinander zu verschweißenden Fügeteilen anliegt. Somit sind die Fügeteile besser zwischen der Arbeitsfläche und der Druckfläche befestigbar. Durch die zweite Struktur der Sonotrode, die auch als Mitnahmestruktur bezeichnet wird, wird im Betrieb der Sonotrode das daran anliegende Fügeteil in Schwingung versetzt. Durch die zweite Struktur des Ambosses, die auch als Festhaltestruktur bezeichnet wird, wird das daran anliegende Fügeteil bezogen auf eine Bewegung der Sonotrode vorzugsweise in seiner Position festgehalten, Mittels der jeweiligen zweiten Strukturen ist daher eine Reibschweißverbindung zwischen zwei Fügeteilen effektiv realisierbar, unabhängig von der Reihenfolge der Anordnung der Fügeteile zwischen Amboss und Sonotrode.

Nachdem die Anordnung aus Kunststoffbeutel und in der Öffnung davon angeordnetem zweiten Fügeteil 10 zwischen der Arbeitsfläche der Sonotrode 30 und der Druckfläche des Ambosses 40 angeordnet wurde, wird die Anordnung zwischen der Arbeitsfläche und der Druckfläche eingeklemmt. Hierzu bewegt sich die Druckfläche auf die Arbeitsfläche zu. Anschließend wird die Sonotrode in Schritt C zum Schwingen angeregt, wobei sich die Sonotrode entlang ihrer Längsachse bewegt.

Die sich ergebende Fügezone, also der Bereich, in dem das erste mit dem zweiten Fügeteil verschweißt wird, bildet aufgrund der beliebigen Form des zweiten Fügeteils keine durchgehende Ebene. Dies ist zusätzlich auch in der an das zweite Fügeteil angepassten Form der Arbeitsfläche der Sonotrode 30 begründet, die oben diskutiert wurde. Analog zur Arbeitsfläche der Sonotrode 30 besteht die Fügezone daher aus einer nicht ebenen, gebogenen und/oder abgewinkelten Fläche, die vorzugsweise zusammenhängend ausgebildet ist. Alternativ dazu besteht die Fügezone aus einer Mehrzahl von gebogenen oder ebenen Teilflächen, die nicht zusammenhängend ausgebildet sind. Dies steht im Gegensatz zu bisher bekannten Reibschweißvorrichtungen, in denen ebene Flächen von gegenüberliegenden Fügeteilen miteinander in Anlage gebracht und verschweißt werden, die auch senkrecht zur Schwingungsrichtung parallel zur Schwingungsrichtung angeordnet sind.

Aufgrund der Anordnung des zweiten Fügeteils 10 und des Kunststoffbeutels an der seitlichen Arbeitsfläche der Sonotrode wird die Fügeenergie in die Fügezone auch nur seitlich bzw. tangential eingeleitet. Dadurch werden bestimmte Nachteile des Ultraschallschweißens, wie lokale Über- oder Unterschweißungen, beim axialen Kontakt zwischen der Sonotrode 30 und dem zu verschweißenden Bereich vermieden. Eine Schwingung der Sonotrode 30 hängt hierbei von dem zu verarbeitendem Material sowie der Größe des zweiten Fügeteils 10 ab. Beispielsweise kann die Schwingung im Bereich von 20 bis 40 kHz, bevorzugt 20 bis 30 kHz liegen. Eine Väriierung der Schweißparameter der Schweißvorrichtung 1 erfolgt vorzugsweise nur insoweit, als das die Amplitude, die Schweißdauer oder die Einklemmkraft variiert werden. Insbesondere eine Variierung der Frequenz erfolgt jedoch nicht.

In Schritt D werden die Arbeitsfläche der Sonotrode 30 und die Druckfläche des Ambosses 40 auseinander bewegt. Hierzu wird insbesondere die Druckfläche des Ambosses 40 von der Arbeitsfläche der Sonotrode 30 wegbewegt. Auf diese Weise ist die Anordnung aus miteinander verschweißtem erstem und zweitem Fügeteil aus der Schweißvorrichtung entnehmbar.

Bezug nehmend auf den Kunststoffbeutel liegt dieser jedoch noch nicht abgedichtet vor, da eine Schweißverbindung nur auf der der Arbeitsfläche der Sonotrode 30 zugewandten Seite des zweiten Fügeteils 10 erfolgt ist. Daher muss auch noch die verbleibende zweite Seite des zweiten Fügeteils 10 mit dem dritten Fügeteil verschweißt werden, also der zweiten Folie des Kunststoffbeutels bzw. dem zweiten Bereich.

Hierzu kann die Anordnung aus verschweißtem erstem und zweitem Fügeteil 10 um 180° um ihre Längsachse gedreht werden und in derselben Schweißvorrichtung 1 erneut angeordnet werden. Auf diese Weise liegt dann das dritte Fügeteil an der Arbeitsfläche der Sonotrode 30 an und das Verschweißen erfolgt analog zu dem oben beschriebenen Verschweißen des ersten Fügeteils mit dem zweiten Fügeteil 10. Alternativ wird die Anordnung aus miteinander verschweißtem erstem und zweitem Fügeteil 10 nach dem Drehen um 180° zu einer weiteren Schweißvorrichtung 1 transportiert, die entlang einer Förderstrecke des Kunststoffbeutels analog zur ersten Schweißvorrichtung 1 ausgerichtet ist. In einer weiteren alternativen Ausführungsform wird nicht die Anordnung aus miteinander verschweißtem erstem und zweitem Fügeteil 10 gedreht, sondern eine weitere Schweißvorrichtung entlang der Förderstrecke des Kunststoffbeutels ist seitenverkehrt zur ersten Schweißvorrichtung aufgebaut.

In den Schritten E, F und G werden die obigen Verfahrensschritte B bis D wiederholt, wobei in den Schritten E bis G das dritte Fügeteil zwischen der Arbeitsfläche der Sonotrode 30 und dem zweiten Fügeteil 10 bzw. der zweiten Seite des Fügeteils 10 angeordnet ist. Das erste Fügeteil befindet sich in diesen Verfahrensschritten daher zwischen dem zweiten Fügeteil 10 bzw. der ersten Seite des zweiten Fügeteils 10 und der Druckfläche des Ambosses 40. Nach Abschluss der Verfahrensschritte E bis G ist die Öffnung in der Rohform des Kunststoffbeutels mittels des zweiten Fügeteils 10 abgedichtet. Wurde die Rohform des Kunststoffbeutels bereits vorher mit Produkt gefüllt, dann ist der Kunststoffbeutel jetzt fertig zur Verwendung. Andernfalls erfolgen nun ein Befüllen des Kunststoffbeutels mit Produkt und ein anschließendes Verschließen der Öffnung im zweiten Fügeteil 10.

## Patentansprüche

1. Sonotrode (30) zum Reibschweißen von mindestens zwei Fügeteilen, die zumindest teilweise aus verschweißbarem Kunststoff bestehen, umfassend:
a) eine Längsachse, entlang der die Sonotrode (30) im Betrieb auslenkbar ist,
b) eine Arbeitsfläche, die bezogen auf die Längsachse lateral an der Sonotrode (30) angeordnet ist, so dass die Arbeitsfläche an einer äußeren Seitenfläche der Sonotrode (30) angeordnet ist und Fügeenergie lateral in eine Fügezone zwischen einem ersten und einem zweiten Fügeteil (10) einleitbar ist, und die im Betrieb an das erste Fügeteil anlegbar ist, wobei
c) die Arbeitsfläche eine erste Struktur aufweist, deren Form an eine Gestalt zumindest des zweiten Fügeteils (10) anpassbar ist.

2. Sonotrode (30) gemäß Patentanspruch 1, wobei die Arbeitsfläche der Sonotrode (30) eine zweite Struktur aufweist, insbesondere in Form einer Mehrzahl von Erhebungen.

3. Sonotrode (30) gemäß Patentanspruch 1 oder 2, wobei die erste Struktur die Form eines Dreieckprismas aufweist.

4. Sonotrode (30) gemäß einem der vorhergehenden Patentansprüche, wobei die erste Struktur der Arbeitsfläche der Sonotrode (30) aus einer nicht ebenen, gebogenen und/oder abgewinkelten Fläche besteht, die vorzugsweise zusammenhängend ausgebildet ist.

5. Sonotrode (30) gemäß einem der Patentansprüche 1 bis 3, wobei die erste Struktur der Arbeitsfläche aus einer Mehrzahl von gebogenen oder ebenen Teilflächen besteht, die nicht zusammenhängend ausgebildet sind.

6. Sonotrode (30) gemäß einem der vorhergehenden Patentansprüche, wobei die erste Struktur der Arbeitsfläche parallel zur Schwingungsrichtung der Sonotrode ausgerichtet ist.

7. Schweißvorrichtung (1) zum Reibschweißen von mindestens zwei Fügeteilen, die zumindest teilweise aus verschweißbarem Kunststoff bestehen, umfassend:
a) eine Sonotrode (30) gemäß einem der Patentansprüche 1 bis 6 mit einer Arbeitsfläche, die bezogen auf eine Längsachse lateral angeordnet ist, die insbesondere an ein erstes Fügeteil anlegbar ist und die eine Form aufweist, die an ein zweites Fügeteil anpassbar ist, sowie
b) einen Amboss (40) mit einer Druckfläche, wobei
c) im Betrieb der Schweißvorrichtung (1) das erste oder das zweite Fügeteil an die Arbeitsfläche der Sonotrode (30) anlegbar ist und das erste sowie das zweite Fügeteil (10) mittels der Druckfläche des Ambosses (40) gegen die Arbeitsfläche der Sonotrode (30) drückbar sind.

8. Schweißvorrichtung (1) gemäß Patentanspruch 7, wobei die Druckfläche des Amboss (40) eine Form aufweist, die an eine Gestalt zumindest des zweiten Fügeteils (10) anpassbar ist.

9. Schweißvorrichtung (1) gemäß Patentanspruch 7 oder 8, wobei die Druckfläche des Amboss (40) eine erste Struktur aufweist, deren Form zumindest an eine Gestalt des zumindest zweiten Fügeteils (10) anpassbar ist, wobei die erste Struktur des Ambosses insbesondere die erste Struktur der Sonotrode spiegelt.

10. Schweißvorrichtung (1) gemäß einem der Patentansprüche 7 bis 9, wobei die Druckfläche eine zweite Struktur aufweist, insbesondere in Form einer Mehrzahl von Erhebungen.

11. Schweißverfahren mit einer Schweißvorrichtung (1) gemäß einem der Patentansprüche 7 bis 10, das die Schritte umfasst:
a) Bereitstellen (A) eines ersten und eines zweiten Fügeteils (10), die zumindest teilweise aus verschweißbarem Kunststoff bestehen,
b) Anordnen (B) des ersten und des zweiten Fügeteils (10) zwischen der lateral zur Schwingungsrichtung der Sonotrode (30) angeordneten Arbeitsfläche der Sonotrode (30) und der Druckfläche des Amboss (40), insbesondere so, dass das erste Fügeteil die Arbeitsfläche der Sonotrode (30) berührt, wobei die Arbeitsfläche der Sonotrode (30) eine Form aufweist, die an eine Gestalt zumindest des zweiten Fügeteils (10) angepasst ist,
c) Anregen (C) der Sonotrode (30) zum Schwingen, wodurch Fügeenergie lateral in eine Fügezone einleitbar ist und sich eine Schweißverbindung zwischen dem ersten Fügeteil und dem zweiten Fügeteil (10) ausbildet, und
d) Auseinanderbewegen (D) der Arbeitsfläche der Sonotrode (30) und der Druckfläche des Ambosses (40), damit die miteinander verschweißten ersten und zweiten Fügeteile (10) aus der Schweißvorrichtung (1) entnehmbar ist.

12. Schweißverfahren gemäß Patentanspruch 11, wobei eine Schwingung der Sonotrode (30) im Ultraschallbereich erfolgt, vorzugsweise zwischen 20 und 40 kHz, besonders bevorzugt zwischen 20 und 30 kHz.

13. Schweißverfahren gemäß einem der Patentansprüche 11 oder 12, wobei das erste Fügeteil mit einer ersten Seite des zweiten Fügeteils (10) verschweißt wurde und das die weiteren Schritte aufweist:
e) Anordnen (E) des zweiten (10) und eines dritten Fügeteils zwischen der Arbeitsfläche der Sonotrode (30) und der Druckfläche des Ambosses (40), insbesondere so, dass das dritte Fügeteil die Arbeitsfläche der Sonotrode (30) und eine zweite Seite des zweiten Fügeteils (10) berührt, wobei das erste Fügeteil die Druckfläche des Ambosses (40) berührt,
f) Anregen (F) der Sonotrode (30) zum Schwingen, wodurch sich eine Schweißverbindung zwischen dem zweiten Fügeteil (10) und dem dritten Fügeteil ausbildet, und
g) Auseinanderbewegen (G) der Arbeitsfläche der Sonotrode (30) und der Druckfläche des Ambosses (40), damit die miteinander verschweißten zweiten (10) und dritten Fügeteile aus der Schweißvorrichtung entnehmbar sind.

14. Schweißverfahren gemäß einem der Patentansprüche 11 bis 13, wobei das Anregen (C) der Sonotrode (30) zum Schwingen so erfolgt, dass die Arbeitsfläche parallel zur Schwingungsrichtung der Sonotrode ausgerichtet ist, während die Arbeitsfläche der Sonotrode (30) aus einer nicht ebenen, gebogenen und/oder abgewinkelten Fläche besteht, die vorzugsweise zusammenhängend ausgebildet ist.

15. Schweißverfahren gemäß einem der Patentansprüche 11 bis 13, wobei das Anregen (C) der Sonotrode (30) zum Schwingen so erfolgt, dass die Arbeitsfläche parallel zur Schwingungsrichtung der Sonotrode ausgerichtet ist, während die Arbeitsfläche aus einer Mehrzahl von gebogenen oder ebenen Teilflächen besteht, die nicht zusammenhängend ausgebildet sind.

## Claims

1. A sonotrode (30) for friction welding of at least two joining parts consisting at least partly of weldable plastic, comprising:
a) a longitudinal axis, along which the sonotrode (30) is deflectable during operation,
b) a working surface, which is arranged laterally to the sonotrode (30) with respect to the longitudinal axis, so that the working surface is arranged at an outer side surface of the sonotrode (30) and that joining energy may be laterally introduced into a joining zone between a first and a second joining part (10) and which can abut the first joining part during operation, wherein
c) the working surface has a first structure, the shape of which is adaptable to a form of at least the second joining part (10).

2. The sonotrode (30) according to patent claim 1, wherein the working surface of the sonotrode (30) has a second structure, especially in the shape of a plurality of projections.

3. The sonotrode (30) according to patent claim 1 or 2, wherein the first structure has the shape of a triangular prism.

4. The sonotrode (30) according to one of the preceding claims, wherein the first structure of the working surface of the sonotrode (30) consists of a uneven, curved and/or angled surface preferably formed contiguously.

5. The sonotrode (30) according to one of the patent claims 1 to 3, wherein the first structure of the working surface consists of a plurality of curved or plane partial surfaces, which are not formed contiguously.

6. The sonotrode (30) according to one of the preceding claims, wherein the first structure of the working surface is oriented parallel to the oscillating direction of the sonotrode.

7. A welding apparatus (1) for friction welding of at least two joining parts consisting at least partly of weldable plastic, comprising:
a) a sonotrode (30) according to one of the patent claims 1 to 6 having a working surface, which is arranged laterally with respect to a longitudinal axis, which especially can abut a first joining part and which has a shape being adaptable to a second joining part, and
b) an anvil (40) with a pressure surface, wherein
c) during operation of the welding apparatus (1), the first or the second joining part can abut the working surface of the sonotrode (30) and the first as well as the second joining part (10) can be pressed against the working surface of the sonotrode (30) by means of the pressure surface of the anvil (40).

8. The welding apparatus (1) according to patent claim 7, wherein the pressure surface of the anvil (40) comprises a shape which is adaptable to a form of at least the second joining part (10).

9. The welding apparatus (1) according to patent claim 7 or 8, wherein the pressure surface of the anvil (40) comprises a first structure, the shape of which is adaptable to a form of at least the second joining part (10), wherein the first structure of the anvil especially mirrors the first structure of the sonotrode.

10. The welding apparatus (1) according to one of the patent claims 7 to 9, wherein the pressure surface has a second structure, especially in the shape of a plurality of projections.

11. A welding method with a welding apparatus (1) according to one of the patent claims 7 to 10, comprising the following steps:
a) providing (A) a first and a second joining part (10) consisting at least partly of weldable plastic,
b) arranging (B) the first and second joining part (10) between the working surface of the sonotrode (30) which is arranged laterally to the oscillating direction of the sonotrode (30) and the pressure surface of the anvil (40), especially in a way that the first joining part touches the working surface of the sonotrode (30), wherein the working surface of the sonotrode (30) has a shape which is adapted to a form of at least the second joining part (10),
c) exciting (C) the sonotrode (30) to oscillate, whereby joining energy can be introduced laterally into a joining zone and a weld connection between the first joining part and the second joining part (10) is formed, and
d) moving apart (D) the working surface of the sonotrode (30) and the pressure surface of the anvil (40), so that the first and second joining parts (10) which have been welded together can be removed from the welding apparatus (1).

12. The welding method according to patent claim 11, wherein an oscillation of the sonotrode (30) takes place in the ultrasonic range, preferably between 20 and 40 kHz, particularly preferably between 20 and 30 kHz.

13. The welding method according to the patent claims 11 or 12, wherein the first joining part has been welded to a first side of the second joining part (10) and which comprises the further steps:
e) arranging (E) the second (10) and a third joining part between the working surface of the sonotrode (30) and the pressure surface of the anvil (40), especially in a way that the third joining part touches the working surface of the sonotrode (30) and a second side of the second joining part (10), wherein the first joining part touches the pressure surface of the anvil (40),
f) exciting (F) the sonotrode (30) to oscillate, whereby a welding connection between the second joining part (10) and the third joining part is formed,
g) moving apart (G) the working surface of the sonotrode (30) and the pressure surface of the anvil (40) so that the second (10) and third joining parts which have been welded together can be removed from the welding apparatus.

14. The welding method according to one of the patent claims 11 to 13, wherein the exciting (C) of the sonotrode (30) to oscillate takes place in a way that the working surface is oriented parallel to the oscillating direction of the sonotrode, wherein the working surface of the sonotrode (30) consists of a uneven, curved and/or angled surface, preferably formed contiguously.

15. The welding method according to one of the patent claims 11 to 13, wherein the exciting (C) of the sonotrode (30) to oscillate takes place in a way that the working surface is oriented parallel to the oscillating direction of the sonotrode, wherein the working surface consists of a plurality of curved or plane partial surfaces, which are not formed contiguously.

## Revendications

1. Sonotrode (30) destinée au soudage par friction d'au moins deux pièces à assembler, qui sont constituées au moins en partie d'une matière plastique soudable, comprenant :
a) un axe longitudinal, le long duquel la sonotrode (30) peut être déviée en fonctionnement,
b) une surface de travail, qui est disposée latéralement sur la sonotrode (30) par rapport à l'axe longitudinal, si bien que la surface de travail est disposée sur une face latérale extérieure de la sonotrode (30) et de l'énergie d'assemblage peut être induite latéralement dans une zone d'assemblage entre une première et une deuxième pièce à assembler (10), et qu'elle peut être appliquée en fonctionnement sur la première pièce à assembler, dans laquelle
c) la surface de travail présente une première structure, dont la forme est adaptable à une configuration d'au moins la deuxième pièce à assembler (10).

2. Sonotrode (30) selon la revendication 1, dans laquelle la surface de travail de la sonotrode (30) présente une seconde structure, en particulier sous la forme de multiples protubérances.

3. Sonotrode (30) selon la revendication 1 ou 2, dans laquelle la première structure présente la forme d'un prisme triangulaire.

4. Sonotrode (30) selon l'une des revendications précédentes, dans laquelle la première structure de la surface de travail de la sonotrode (30) consiste en une surface non plane, incurvée et/ou angulaire, qui est conçue de préférence de façon contiguë.

5. Sonotrode (30) selon l'une des revendications 1 à 3, dans laquelle la première structure de la surface de travail est constituée de multiples surfaces partielles planes ou incurvées, qui ne sont pas conçues de façon contiguë.

6. Sonotrode (30) selon l'une des revendications précédentes, dans laquelle la première structure de la surface de travail est alignée parallèlement à la direction de vibration de la sonotrode.

7. Dispositif de soudure (1) destinée au soudage par friction d'au moins deux pièces à assembler, qui sont constituées au moins en partie d'une matière plastique soudable, comprenant :
a) une sonotrode (30) selon l'une des revendications 1 à 6 avec une surface de travail, qui est disposée latéralement par rapport à un axe longitudinal, qui peut être appliquée notamment sur une première pièce à assembler et qui présente une forme adaptable à une deuxième pièce à assembler, ainsi
b) qu'une enclume (40) présentant une surface d'appui, dans lequel
c) la première ou la deuxième pièce à assembler peut être appliquée sur la surface de travail de la sonotrode (30) au cours du fonctionnement du dispositif de soudure (1) et la première ainsi que la deuxième pièce à assembler (10) peuvent être pressées contre la surface de travail de la sonotrode (30) au moyen de la surface d'appui de l'enclume (40).

8. Dispositif de soudure (1) selon la revendication 7, dans lequel la surface d'appui de l'enclume (40) présente une forme, qui est adaptable à une configuration d'au moins la deuxième pièce à assembler (10).

9. Dispositif de soudure (1) selon la revendication 7 ou 8, dans lequel la surface d'appui de l'enclume (40) présente une première structure, dont la forme est adaptable à au moins une configuration d'au moins la deuxième pièce à assembler (10), dans lequel la première structure de l'enclume reflète en particulier la première structure de la sonotrode.

10. Dispositif de soudure (1) selon l'une des revendications 7 à 9, dans lequel la surface d'appui présente une seconde structure, notamment sous la forme de multiples protubérances.

11. Procédé de soudage doté d'un dispositif de soudure (1) selon l'une des revendications 7 à 10, qui présente les étapes suivantes :
a) la mise à disposition (A) d'une première et d'une deuxième pièce à assembler (10), qui sont constituées au moins en partie d'une matière plastique soudable,
b) l'agencement (B) de la première et de la deuxième pièce à assembler (10) entre la surface de travail de la sonotrode (30) disposée latéralement par rapport à la direction de vibration de la sonotrode (30) et la surface d'appui de l'enclume (40), en particulier de manière à ce que la première pièce à assembler touche la surface de travail de la sonotrode (30), dans lequel la surface de travail de la sonotrode (30) présente une forme, qui est adaptée à une configuration d'au moins la deuxième pièce à assembler (10),
c) l'excitation (C) de la sonotrode (30) pour l'amener à vibrer, moyennant quoi de l'énergie d'assemblage peut être induite latéralement dans une zone d'assemblage et un assemblage soudé se forme entre la première et la deuxième pièce à assembler (10), et
d) l'écartement (D) de la surface de travail de la sonotrode (30) et de la surface d'appui de l'enclume (40), afin que les première et deuxième pièces à assembler (10) soudées l'une à l'autre puissent être prélevées du dispositif de soudure (1).

12. Procédé de soudage selon la revendication 11, dans lequel une vibration de la sonotrode (30) se déroule dans le domaine des ultrasons, de préférence entre 20 et 40 kHz, mieux encore entre 20 et 30 kHz.

13. Procédé de soudage selon l'une des revendications 11 ou 12, dans lequel la première pièce à assembler a été soudée à une première face de la deuxième pièce à assembler (10) et lequel présente les autres étapes suivantes :
e) l'agencement (E) de la deuxième et d'une troisième pièce à assembler entre la surface de travail de la sonotrode (30) et la surface d'appui de l'enclume (40), en particulier de manière à ce que la troisième pièce à assembler touche la surface de travail de la sonotrode (30) et une seconde face de la deuxième pièce à assembler (10), dans lequel la première pièce à assembler touche la surface d'appui de l'enclume (40),
f) l'excitation (F) de la sonotrode (30) pour l'amener à vibrer, moyennant quoi un assemblage soudé se forme entre la deuxième pièce à assembler (10) et la troisième pièce à assembler, et
g) l'écartement (G) de la surface de travail de la sonotrode (30) et de la surface d'appui de l'enclume (40), afin que les deuxième (10) et troisième pièces à assembler soudées l'une à l'autre puissent être prélevées du dispositif de soudure.

14. Procédé de soudage selon l'une des revendications 11 à 13, dans lequel l'excitation (C) de la sonotrode (30) pour l'amener à vibrer se déroule de manière à ce que la surface de travail soit alignée parallèlement à la direction de vibration de la sonotrode, tandis que la surface de travail de la sonotrode (30) consiste en une surface non plane, incurvée et/ou angulaire, qui est conçue de préférence de façon contiguë.

15. Procédé de soudage selon l'une des revendications 11 à 13, dans lequel l'excitation (C) de la sonotrode (30) pour l'amener à vibrer se déroule de manière à ce que la surface de travail soit alignée parallèlement à la direction de vibration de la sonotrode, tandis que la surface de travail est constituée de multiples surfaces partielles planes ou incurvées, qui ne sont pas conçues de façon contiguë.
